(19) **Europäisches Patentamt / European Patent Office / Office européen des brevets**

(11) **EP 4 519 539 B1**

(12) **EUROPEAN PATENT SPECIFICATION**

(45) Date of publication and mention of the grant of the patent:
**15.07.2026  Bulletin 2026/29**

(21) Application number: **22732633.7**

(22) Date of filing: **06.05.2022**

(51) International Patent Classification (IPC):
**E21B 43/00** *(2006.01)*      **G01V 99/00** *(2024.01)*
**G06F 30/20** *(2020.01)*      **G06N 3/04** *(2023.01)*

(52) Cooperative Patent Classification (CPC):
**E21B 43/00; G06F 30/27; G06F 30/28; G06N 3/09;**
G01V 99/00; G06F 2111/10; G06F 2113/08;
G06N 3/0464

(86) International application number:
**PCT/IB2022/000259**

(87) International publication number:
**WO 2023/214191 (09.11.2023 Gazette 2023/45)**

(54) **A METHOD FOR CHARACTERIZING A GEOLOGICAL RESERVOIR OF INTEREST**

**VERFAHREN ZUR CHARAKTERISIERUNG EINES GEOLOGISCHEN RESERVOIRS VON INTERESSE**

**PROCÉDÉ DE CARACTÉRISATION D'UN RÉSERVOIR GÉOLOGIQUE D'INTÉRÊT**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.03.2025  Bulletin 2025/11**

(73) Proprietors:
- **TotalEnergies OneTech
  92400 Courbevoie (FR)**
- **Université Toulouse II
  31100 Toulouse (FR)**
- **Institut National Polytechnique de Toulouse
  31400 Toulouse (FR)**
- **CENTRE NATIONAL DE LA RECHERCHE
  SCIENTIFIQUE
  75016 Paris (FR)**
- **UNIVERSITE TOULOUSE III - PAUL SABATIER
  31062 Toulouse Cedex 9 (FR)**

(72) Inventors:
- **BUSBY, Daniel
  63018 Pau Cedex (FR)**
- **YEWGAT, Abderrahmane
  63018 Pau Cedex (FR)**
- **CHEVALIER, Max
  31062 Toulouse Cedex 9 (FR)**
- **LAPEYRE, Corentin
  31058 Toulouse Cedex 9 (FR)**

(74) Representative: **Lavoix
  2, place d'Estienne d'Orves
  75441 Paris Cedex 09 (FR)**

(56) References cited:
EP-A1- 3 671 290          WO-A1-2012/015516
US-A1- 2021 264 262      US-A1- 2021 389 491

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

The present invention concerns a method for characterizing a geological reservoir of interest. The present invention also concerns an associated computer program product. The present invention also relates to an associated readable information carrier.

BACKGROUND OF THE INVENTION

An aquifer is an example of a geological reservoir. An aquifer, also called water and/or hydrocarbon-bearing reservoir is an underground layer of water and/or hydrocarbon-bearing permeable rock, rock fractures or unconsolidated materials (gravel, sand, or silt). An oil reservoir is a particular type of aquifer.
History matching consists in finding the geological parameters of a reservoir model allowing to reproduce the dynamic data (hydrocarbon flow and pressures) observed on the field. To do this, an inverse problem is solved.
However, solving the inverse problem requires the evaluation of a large number of flow simulations which can be very expensive in terms of computing time. This is why an history matching can take several months.
Indeed, classical simulation approaches are based on the resolution of partial differential equations that govern fluid flow in a porous medium. This resolution of PDEs quickly becomes very expensive (in computation time) when the geological model is of large size (hundreds of thousands/millions of cells). In addition, this resolution of PDEs must be performed each time the geological model is changed.
Many approaches have been proposed to build predictive reservoir models faster than classical approaches, one of them being found in the document US 2021/389491 A1.
Among these approaches we can distinguish several categories:

- Response surface approaches aim at building proxies of the production curves of each well/observed quantity as a function of a small number of macro or global parameters. These approaches are interpolation methods: in general a different model is built for each observed data or time series of data.
- Reduced physics approaches: in these approaches the geological model is simplified by drastically reducing the number of model parameters (for example by doing a very rough upscaling of the geological model). The physical equations can also be simplified. The resulting simulation models can be very fast, but ultimately do not allow for the inference of very precise geological parameters (which may be necessary to make decisions on the setting of new wells for example).
- Pure machine learning approaches: these approaches only work in cases where the number of observed data is very large (several hundred of wells). They allow production forecasts to be made, generally for existing wells, while for new wells the results are generally very uncertain.

SUMMARY OF THE INVENTION

Hence, there exists a need for a method enabling to predict faster and in a reliable way the flow parameters of a geological reservoir of interest.
To this end, the invention relates to a method for characterizing a geological reservoir of interest, the method comprising the following steps which are computer-implemented:

- obtaining a physics model defining a relation between flow parameter(s) of a given geological reservoir at a timestep and flow parameter(s) of the given geological reservoir at the previous timestep for a plurality of timesteps, the physics model being based on elementary functions specific to each timestep so that the flow parameter at a timestep depends on the elementary functions corresponding to said flow parameter at said timestep and on at least the corresponding flow parameter obtained at the previous timestep,
- obtaining a training database relative to known possible geological realizations of a given geological reservoir, the training database comprising for each geological realization a set of data comprising:

  • a past spatiotemporal evolution of flow parameter(s) for said geological reservoir,
  • values of at least one geological feature for said geological reservoir,

- training an artificial intelligence model according to a training technique applied to the training database to obtain a trained model, the trained model predicting the spatiotemporal evolution over a period of time of flow parameter(s) for a geological reservoir of interest when a set of input data relative to the geological reservoir of interest are inputted in the trained model , the set of input data comprising initial values of each flow parameter for the geological reservoir of interest and values of each geological feature for said geological reservoir of interest, the artificial intelligence model being a neural network having neural parameters, the training technique enabling to approximate the elementary functions of the physics model for each timestep by setting the values of the neural parameters for each timestep so that some values are specific for each timestep,

- obtaining a set of input data for a geological reservoir of interest, and
- characterizing the geological reservoir of interest by operating the trained model for predicting the spatiotemporal evolution of each flow parameter for the geological reservoir of interest on the basis of the obtained set of input data.

The method according to the invention may comprise one or more of the following features considered alone or in any combination that is technically possible:

- during the training step, the setting of the values of the neural parameters for each timestep is carried out so that some values are common for all the timesteps;
- during the training step, the values of the neural parameters are set so as to minimize a cost function, the cost function describing the differences between the spatiotemporal evolutions of flow parameter(s) of the training database and the corresponding spatiotemporal evolutions of flow parameter(s) obtained with the artificial intelligence model;
- the artificial intelligence model is a convolutional neural network;
- at least a geological feature of the geological reservoir is chosen among the porosity, the permeability, the net to gross, the fault transmissibility tensor, the residual oil/water saturations and the changes in the boundary conditions related to the well controls;
- at least a flow parameter is chosen in the group consisting in : a fluid saturation, a gas saturation, a fluid pressure and a gas pressure;
- the physics model is such that the flow parameter at a timestep depends on the corresponding elementary functions at said timestep, on the corresponding flow parameter obtained at the previous timestep and on at least another flow parameters obtained at the previous timestep;
- at least two flow parameters are considered when implementing the method, the two flow parameters being a saturation and a pressure of an element in the considered geological reservoir, the physics model being described by the following equations:

$$\hat{P}(\Delta t, x, y, z, m) =$$
$$\hat{P}(\Delta t - 1, x \pm \Delta x, y \pm \Delta y, z \pm \Delta z, m)$$
$$- g_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$\hat{S}(\Delta t, x, y, z, m)$$
$$= \hat{S}(\Delta t - 1, x \pm \Delta x, y \pm \Delta y, z \pm \Delta z, m)$$
$$- f_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$P(\Delta t_0, x, y, z, m) = P0$$

$$S(\Delta t_0, x, y, z, m) = S0$$

Where:

- $m$ corresponds to the geological features of a geological reservoir,
- $\hat{P}(\Delta t, x, y, z, m)$ is the predicted pressure of the element at timestep $\Delta t$ in the region of space defined by the spatial coordinates for a geological reservoir having the geological features m,
- $\hat{P}(\Delta t - 1, x \pm \Delta x, y \pm \Delta y, z \pm \Delta z, m)$ is the predicted pressure of the element at timestep $\Delta t$-1 in the region of space defined by the spatial coordinates ($x \pm \Delta x, y \pm \Delta y, z \pm \Delta z$) for a geological reservoir having the geological features $m$,
- $\hat{S}(\Delta t, x, y, z, m)$ is the predicted saturation of the element at timestep $\Delta t$ in the region of space defined by the spatial coordinates for a geological reservoir having the geological features $m$,

- $\hat{S}(\Delta t - 1, x \pm \Delta x, y \pm \Delta y, z \pm \Delta z, m)$ is the predicted saturation of the element at timestep $\Delta t-1$ in the region of space defined by the spatial coordinates $(x \pm \Delta x, y \pm \Delta y, z \pm \Delta z)$ for a geological reservoir having the geological features $m$,
- $P0$ is the pressure of the element at the initial timestep $\Delta t_0$ in the region of space defined by the spatial coordinates for a geological reservoir having the geological features $m$,
- $S0$ is the saturation of the element at the initial timestep $\Delta t_0$ in the region of space defined by the spatial coordinates for a geological reservoir having the geological features $m$,
- $g_t$ is an elementary function at timestep $\Delta t$ for the pressure, and
- $f_t$ is an elementary function at timestep $\Delta t$ for the saturation;

- each set of data of the training database are simulated data obtained using a simulator based on partial differential equations;
- the characterizing step comprises:

  - obtaining a measured spatiotemporal evolution of the flow parameters for the geological reservoir of interest over the same period of time than the trained model, and
  - repeating the operation of the trained model for different values of the geological feature(s) of the geological reservoir of interest in the input data until the spatiotemporal evolution of the flow parameters obtained with the trained model matches the measured spatiotemporal evolution of the flow parameters, the value(s) of the geological feature(s) in the input data corresponding to the matching enabling to characterize the geological reservoir of interest;

- at least a flow parameter is a gas saturation, the characterizing step comprising:
- repeating the operation of the trained model for different values of the geological feature(s) of the geological reservoir of interest in the input data, and
- evaluating the probability that the gas goes out of the geological reservoir on the basis of the spatiotemporal evolution of said gas saturation obtained for the different values of the geological feature(s).

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which a computer program product as previously described is stored.

BRIEF DESCRIPTION OF THE DRAWINGS

The invention will be easier to understand in view of the following description, provided solely as an example and with reference to the appended drawings in which:

- Figure 1 is a schematic view of an example of a calculator allowing the implementation of a method for characterizing a geological reservoir of interest,
- Figure 2 is a flowchart of an example of implementation of a method for characterizing a geological reservoir of interest, and
- Figure 3 is a schematic representation of an example of implementation of the training step of the method, and
- Figure 4 is a schematic representation of an example of operation of the trained model of the method.

DETAILED DESCRIPTION OF SOME EMBODIMENTS

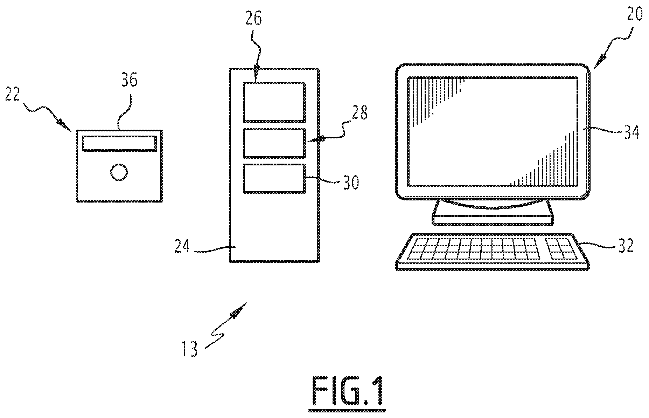

An example of a calculator 20 and of a computer program product 22 are illustrated on figure 1.

The calculator 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

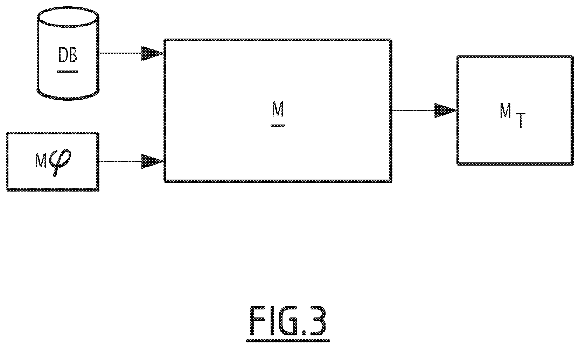

As illustrated on figure 1, the calculator 20 comprises a processor 24 comprising a data processing unit 26, memories 28 and a reader 30 for information media. In the example illustrated on figure 3, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for characterizing a geological reservoir of interest, when the computer program 22 is loaded on the processing unit 26 of the calculator 20.

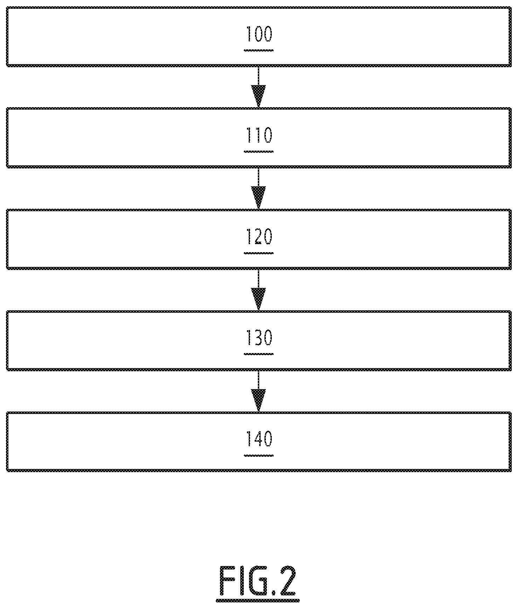

A method for characterizing a geological reservoir of interest in an area of interest, will now be described with reference to figures 2 to 4.

In an example, the geological reservoir of interest is a reservoir of hydrocarbon corresponding to one or several drilling wells. The area of interest is an hydrocarbon field. A field is an area where a large amount of hydrocarbons is buried and an attempt to extract it can be made by drilling wells. A field typically extends over several kilometers, allowing for several wells in one field.

The characterization method enables to characterize a geological reservoir of interest, in particular by predicting the spatio-temporal evolution of flow parameters $P_F$ for this geological reservoir of interest. The flow parameters $P_F$ are for example the saturation or the pressure of an element in the geological reservoir.

The characterization method comprises a step 100 of obtaining a physics model $M\varphi$. The obtaining step 100 is implemented by the calculator 10 in interaction with the computer program product 12, that is to say is implemented by a computer.

The physics model $M\varphi$ defines a relation between flow parameter(s) $P_F$ of a given geological reservoir at a timestep $\Delta t$ and flow parameter(s) $P_F$ of the given geological reservoir at the previous timestep $\Delta t$-1 for a plurality of timesteps.

The physics model $M\varphi$ is relative to at least one flow parameter $P_F$. In an example of embodiment, the physics model $M\varphi$ is relative to two flow parameters $P_F$ which are a saturation and a pressure of an element in the considered geological reservoir. The element is, for example, a fluid (oil, water) or a gas.

More specifically, the physics model $M\varphi$ is based on elementary functions $f_t$, $g_t$ which are specific to each timestep (and unknown). The elementary functions $f_t$, $g_t$ ensure the simulation from one moment to the next. Hence, the flow parameter $P_F$ at a timestep $\Delta t$ depends on the elementary functions $f_t$, $g_t$ corresponding to said flow parameter $P_F$ at said timestep $\Delta t$ and on at least the corresponding flow parameter $P_F$ obtained at the previous timestep $\Delta t$-1.

The physics model $M\varphi$ is such that the flow parameter $P_F$ at a timestep $\Delta t$ depends on the corresponding elementary functions $f_t$, $g_t$ at said timestep $\Delta t$, on the corresponding flow parameter $P_F$ obtained at the previous timestep $\Delta t$-1 and on at least another flow parameters $P_F$ obtained at the previous timestep $\Delta t$-1. In this case, the considered flow parameters $P_F$ are interdependent.

Preferably, the geological reservoir is divided into space regions (volume), each space region corresponding to a value of each flow parameter $P_F$, and the relations described above applied for each space region. Preferably, when the physics model $M\varphi$ is relative to two flow parameters $P_F$ which are a saturation and a pressure of an element in the considered geological reservoir, the physics model $M\varphi$ is described by the following equations:

$$\hat{P}(\Delta t, x, y, z, m) =$$
$$\hat{P}(\Delta t - 1, x \pm \Delta x, y \pm \Delta y, z \pm \Delta z, m)$$
$$- g_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z\right.$$
$$\left.\pm \Delta z, m)\right)$$

$$\hat{S}(\Delta t, x, y, z, m)$$
$$= \hat{S}(\Delta t - 1, x \pm \Delta x, y \pm \Delta y, z \pm \Delta z, m)$$
$$- f_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z\right.$$
$$\left.\pm \Delta z, m)\right)$$

$$P(\Delta t_0, x, y, z, m) = P0$$

$$S(\Delta t_0, x, y, z, m) = S0$$

Where:

- m corresponds to the geological features of a geological reservoir (geological model of the geological reservoir) and is also dependent of the spatial position x, y, z,
- $\hat{P}(\Delta t, x, y, z, m)$ is the predicted pressure of the element at timestep $\Delta t$ in the region of space defined by the spatial coordinates (x, y, z) for a geological reservoir having the geological features $m$,
- $\hat{P}(\Delta t - 1, x \pm \Delta x, y \pm \Delta y, z \pm \Delta z, m)$ is the predicted pressure of the element at timestep $\Delta t-1$ in the region of space defined by the spatial coordinates ($x \pm \Delta x, y \pm \Delta y, z \pm \Delta z$) for a geological reservoir having the geological features $m$,
- $\hat{S}(\Delta t, x, y, z, m)$ is the predicted saturation of the element at timestep $\Delta t$ in the region of space defined by the spatial coordinates (x, y, z) for a geological reservoir having the geological features $m$,
- $\hat{S}(\Delta t - 1, x \pm \Delta x, y \pm \Delta y, z \pm \Delta z, m)$ is the predicted saturation of the element at timestep $\Delta t-1$ in the region of space defined by the spatial coordinates ($x \pm \Delta x, y \pm \Delta y, z \pm \Delta z$) for a geological reservoir having the geological features $m$,
- $P0$ is the pressure of the element at the initial timestep $\Delta t_0$ in the region of space defined by the spatial coordinates (x, y, z) for a geological reservoir having the geological features $m$,
- $S0$ is the saturation of the element at the initial timestep $\Delta t_0$ in the region of space defined by the spatial coordinates (x, y, z) for a geological reservoir having the geological features $m$,
- $g_t$ is an elementary function at timestep $\Delta t$ for the pressure, and
- $f_t$ is an elementary function at timestep $\Delta t$ for the saturation.

Typically, the geological reservoir is divided in cells by a grid and the position x, y, z corresponds to the coordinates of each cell. This division in cells corresponds to a spatial discretization of the geological reservoir. The details of this spatial discretization (cells shape and position) are not an input to our model, however the proximity of the cells is used for the construction of the function $f_t$ and $g_t$ by the deep learning algorithm which consider each cell identical as pixel of an image. Deep learning methods in fact are based on convolutions with some spatial filters composed of a fixed number of cells in x,y,z directions.

In this last example, the considered flow parameters $P_F$ are interdependent. i.e. to have the pressure at time t+1 there is a need of the pressure and saturation at the time before t.

In this last example, the geological features of the geological reservoir defining the geological model are the porosity of the geological reservoir and the permeability of the geological reservoir.

In the general case any additional parameter that will affect the fluid can be considered as a geological feature, as for instance, the net to gross, the fault transmissibility tensor, the residual oil/water saturations and the changes in the boundary conditions related to the well controls (bottom hole pressure or total fluid rates for each injector and producer well).

The net to gross is the percentage of the volume of the cell which is clayey (no fluid).

The fault transmissibility tensor is relative to a fault between two adjacent cells.

The residual oil/water saturation is relative to the relative permeability and expresses the fact that a certain amount of oil/water cannot be moved out of the geological reservoir and will stay in the geological reservoir.

The boundary conditions are relative to the operations of operators on wells (opening of the wells, injection of water in wells).

The characterization method comprises a step 110 of obtaining a training database DB relative to a plurality of known possible geological realizations of a given geological reservoir. The obtaining step 110 is implemented by the calculator 10 in interaction with the computer program product 12, that is to say is implemented by a computer.

The training database DB comprises for each known geological realization of the geological reservoir a set of data comprising:

- a past spatiotemporal evolution of flow parameter(s) $P_F$ for said geological reservoir (for each space region or grid cell), and
- values for each geological feature of said geological reservoir, each value corresponding to a space region or grid cell of the geological reservoir.

The past spatiotemporal evolution of each flow parameter $P_F$ describes the spatiotemporal evolution of said flow parameter $P_F$, timestep by timestep, over a given temporal period.

Preferably, at least a geological feature of the geological reservoir is chosen among the porosity and the permeability (for each spatial region of the geological reservoir).

Preferably, each set of data of the training database DB are simulated data obtained using a simulator based on partial differential equations.

The characterization method comprises a step 120 of training an artificial intelligence model M. The training step 120 is implemented by the calculator 10 in interaction with the computer program product 12, that is to say is implemented by a computer.

The artificial intelligence model M is trained according to a training technique applied to the training database DB to obtain a trained model $M_T$.

The trained model $M_T$ predicts at its output the spatiotemporal evolution over a period of time of flow parameter(s) $P_F$ for a geological reservoir of interest when a set of input data $D_{in}$ relative to the geological reservoir of interest are inputted in the trained model $M_T$.

The set of input data $D_{in}$ comprises:

- initial values of each flow parameter $P_F$ for the geological reservoir of interest, that is to say an initial value for each region of coordinates (x, y, z) of the geological reservoir, and
- a value of each geological feature for each region of space of coordinates (x, y, z) of the geological reservoir.

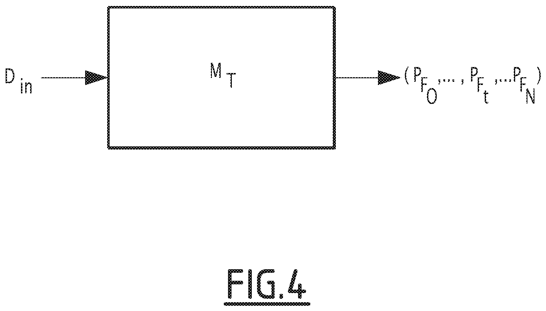

The artificial intelligence model M is a neural network having neural parameters (also called weights). The training technique enables to approximate the elementary functions $f_t$, $g_t$ (which are unknown) of the physics model $M_\varphi$ for each timestep by setting the values of the neural parameters for each timestep so that some values are specific for each timestep. Figure 3 summarizes the different elements used to train the model M. Figure 4 summarizes the input and the output of the trained model $M_T$.

Preferably, during the training step, the setting of the values of the neural parameters for each timestep is carried out so that some values are common for all the timesteps.

Preferably, during the training step, the values of the neural parameters are set so as to minimize a cost function. The cost function describes the differences between the spatiotemporal evolutions of flow parameter(s) $P_F$ of the training database DB and the corresponding spatiotemporal evolutions of flow parameter(s) $P_F$ obtained with the artificial intelligence model M.

Preferably, the artificial intelligence model M is a convolutional neural network.

In an example of implementation, each elementary function is parameterized by neural parameters (weights) $f_t(.) = f_t(W_{ft})$, $g_t(.) = g_t(W_{gt})$ for $t = 1 ... T$. The neural parameters $[W_{ft}, W_{gt}]$, for $t = 1 ... T$ completely characterize the elementary functions. This means that the model M is totally defined by the knowledge of these parameters.

Then, in this example of implementation, in order not to have a total number of parameters that increases rapidly with the number of timesteps, a strategy of shared parameters is used: $W_{ft} = W_f, W_{ft}]$, $t = 1 ... T$, $W_{gt} = W_g, w_{gt}]$, $t = 1 ... T$. The parameters $W_f$, $W_g$ are the same for all the elementary functions $f_t(.)$, $g_t(.)$ for $t = 1 ... T$. The parameters $w_{ft}$, $w_{gt}$ are the parameters to be added to construct $f_t(.)$, $g_t(.)$. The total number of parameters $w_{ft}$, $w_{gt}$ is very small compared to the total number of parameters $W_f$, $W_g$. greatly with the length of the simulation.

In this example of implementation, the elementary functions $f_t(.)$, $g_t(.)$ are adapted to each time step with their adjustable parameters $w_{ft}$, $w_{gt}$. Obtaining the adjustable parameters $w_{ft}$, $w_{gt}$ is achieved by an optimization. The cost function of this optimization is the following:

$$F_{cost} = (observed\ simulations - model\ simulations\ (W_f, W_g, w_{ft}, w_{gt}))$$

The previous cost function measures the difference between simulations obtained from classical methods and simulations made from the model M. During the phase called learning phase the previous optimization will optimize the parameters $[W_f, W_g, w_{ft}, w_{gt}]$ so that the difference between the observed simulations and the simulations produced by the model M is minimal. The parameters that minimize the cost function noted $\left[ W_f^*, W_g^*, w_{ft}^*, w_{gt}^* \right]$ are called the model parameters.

In an example of implementation, the architecture of the functions $f_t(.)$, $g_t(.)$ is based on tools such as Inception Resnet, Dense, Max pooling and Upsampling.

For example, the artificial intelligence model M is built on the basis of the Dense-U-Net architecture such as an architecture described in the article Zhang, Z., Wu, C., Coleman, S., & Kerr, D. (2020). DENSE-INception U-net for medical image segmentation. Computer Methods and Programs in Biomedicine.

The person skilled in the art will understand that the training step 120 comprises the effective training of the model M, as well as tests and validation performed on the model M so as to obtain the trained model $M_T$. In particular, during the validation, simulations produced by the trained model $M_T$ are compared with simulations produced by classical methods and which have not been included in the cost function. The validation allows to test the generalization of the trained model

$M_T$. If the results of this comparison are acceptable according to a well-defined criterion, the trained model $M_T$ is ready to be used on new cases. If not, the trained model $M_T$ goes back to the previous optimization to improve the results.

The characterization method comprises a step 130 of obtaining a set of input data $D_{in}$ for a geological reservoir of interest. The obtaining step 130 is implemented by the calculator 10 in interaction with the computer program product 12, that is to say is implemented by a computer.

As previously described, the set of input data $D_{in}$ comprises initial values of each flow parameter $P_F$ for the geological reservoir, and a value of each geological feature of said geological reservoir of interest for each region of space or grid cell.

The characterization method comprises a step 140 of characterizing the geological reservoir of interest by operating the trained model $M_T$ for predicting the spatio-temporal evolution of each flow parameter $P_F$ for the geological reservoir of interest on the basis of the obtained set of input data $D_{in}$. The characterizing step 140 is implemented by the calculator 10 in interaction with the computer program product 12, that is to say is implemented by a computer.

In a first example of implementation, the characterization methods aims at obtaining geological features of the geological reservoir of interest according to the principle of history matching. In this first example of implementation, the characterizing step 140 comprises:

- obtaining a measured spatiotemporal evolution of the flow parameters $P_F$ for the geological reservoir of interest over the same period of time (past period of time) than the trained model $M_T$, and
- repeating the operation of the trained model $M_T$ for different values of the geological feature(s) of the geological reservoir of interest in the input data $D_{in}$ until the spatiotemporal evolution of the flow parameters $P_F$ obtained with the trained model $M_T$ matches the measured spatiotemporal evolution of the flow parameters $P_F$.

In this first example of implementation, the values of the geological feature(s) in the input data $D_{in}$ corresponding to the matching enables to characterize the geological reservoir of interest. For example, the geological features which are obtained are the pressure and/or the saturation of an element in the geological reservoir of interest.

In a second example of implementation, at least a flow parameter $P_F$ is a gas saturation. In this second example of implementation, the characterizing step 140 comprises:

- repeating the operation of the trained model $M_T$ for different values of the geological feature(s) of the geological reservoir of interest in the input data $D_{in}$, and
- evaluating the probability that the gas goes out of the geological reservoir on the basis of the spatiotemporal evolution of said gas saturation obtained for the different values of the geological feature(s). Indeed, this allows to better evaluating the potential geological features of the geological reservoir of interest that would induce a gas escape out of the geological reservoir of interest.

Hence, the characterization method is based on an hybrid technology that mixes Machine Learning (Deep Learning) and physics. Using Deep Learning enables to learn from the observational data at hand. Using physics enables to obtain a Deep Learning model that respects physics.

The obtained trained model $M_T$ enables to simulate over long periods of time, while handling complex geologies. In particular, the trained model $M_T$ enables to perform dynamic simulations of a petroleum reservoir in a few seconds for a new geological model parameterized by thousands/millions of variables, where the same simulation with a standard reservoir simulator would take several hours. Hence, the trained model $M_T$ enables to predict faster and in a reliable way the flow parameters of a geological reservoir of interest.

The scope of protection of the present invention is defined in the appended claims.

**Claims**

1. A method for characterizing a geological reservoir of interest, the method comprising the following steps which are computer-implemented:

   - obtaining a physics model ($M_\varphi$) defining a relation between flow parameter(s) ($P_F$) of a given geological reservoir at a timestep ($\Delta t$) and flow parameter(s) ($P_F$) of the given geological reservoir at the previous timestep ($\Delta t-1$) for a plurality of timesteps, the physics model ($M_\varphi$) being based on elementary functions ($f_t$, $g_t$) specific to each timestep so that the flow parameter ($P_F$) at a timestep ($\Delta t$) depends on the elementary functions ($f_t$, $g_t$) corresponding to said flow parameter ($P_F$) at said timestep ($\Delta t$) and on at least the corresponding flow parameter ($P_F$) obtained at the previous timestep ($\Delta t-1$),
   - obtaining a training database (DB) relative to known possible geological realizations of a given geological reservoir, the training database (DB) comprising for each geological realization a set of data comprising:

- a past spatiotemporal evolution of flow parameter(s) ($P_F$) for said geological reservoir,
- values of at least one geological feature for said geological reservoir,

- training an artificial intelligence model (M) according to a training technique applied to the training database (DB) to obtain a trained model ($M_T$), the trained model ($M_T$) predicting the spatiotemporal evolution over a period of time of flow parameter(s) ($P_F$) for the geological reservoir of interest when a set of input data ($D_{in}$) relative to the geological reservoir of interest are inputted in the trained model ($M_T$), the set of input data ($D_{in}$) comprising initial values of each flow parameter ($P_F$) for the geological reservoir of interest and values of each geological feature for said geological reservoir of interest, the artificial intelligence model (M) being a neural network having neural parameters, the training technique enabling to approximate the elementary functions ($f_t$, $g_t$) of the physics model ($M_\varphi$) for each timestep by setting the values of the neural parameters for each timestep so that some values are specific for each timestep,

- obtaining a set of input data ($D_{in}$) for the geological reservoir of interest, and

- characterizing the geological reservoir of interest by operating the trained model ($M_T$) for predicting the spatiotemporal evolution of each flow parameter ($P_F$) for the geological reservoir of interest on the basis of the obtained set of input data ($D_{in}$).

2. A method according to claim 1, wherein, during the training step, the setting of the values of the neural parameters for each timestep is carried out so that some values are common for all the timesteps.

3. A method according to claim 1 or 2, wherein during the training step, the values of the neural parameters are set so as to minimize a cost function, the cost function describing the differences between the spatiotemporal evolutions of flow parameter(s) ($P_F$) of the training database (DB) and the corresponding spatiotemporal evolutions of flow parameter(s) ($P_F$) obtained with the artificial intelligence model (M).

4. A method according to any one of claims 1 to 3, wherein the artificial intelligence model (M) is a convolutional neural network.

5. A method according to any one of claims 1 to 4, wherein at least a geological feature of the geological reservoir is chosen among the porosity, the permeability, the net to gross, the fault transmissibility tensor, the residual oil/water saturations and the changes in the boundary conditions related to the well controls.

6. A method according to any one of claims 1 to 5, wherein at least a flow parameter ($P_F$) is chosen in the group consisting in : a fluid saturation, a gas saturation, a fluid pressure and a gas pressure.

7. A method according to any one of claims 1 to 6, wherein the physics model ($M_\varphi$) is such that the flow parameter ($P_F$) at a timestep ($\Delta t$) depends on the corresponding elementary functions ($f_t$, $g_t$) at said timestep ($\Delta t$), on the corresponding flow parameter ($P_F$) obtained at the previous timestep ($\Delta t$-1) and on at least another flow parameters ($P_F$) obtained at the previous timestep ($\Delta t$-1).

8. A method according to any one of claims 1 to 7, wherein at least two flow parameters ($P_F$) are considered when implementing the method, the two flow parameters ($P_F$) being a saturation and a pressure of an element in the considered geological reservoir, the physics model ($M_\varphi$) being described by the following equations:

$$\hat{P}(\Delta t, x, y, z, m) =$$
$$\hat{P}(\Delta t - 1, x \pm \Delta x, y \pm \Delta y, z \pm \Delta z, m)$$
$$- g_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$\hat{S}\,(\Delta t, x, y, z, m)$$
$$= \hat{S}(\Delta t - 1, x \pm \Delta x, y \pm \Delta y, z \pm \Delta z, m)$$
$$- f_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$\mathrm{P}(\Delta t_0, x, y, z, m) = P0$$

where:

$$\mathrm{S}(\Delta t_0, x, y, z, m) = S0$$

- m corresponds to the geological features of a geological reservoir,
- $\hat{P}(\Delta t, x, y, z, m)$ is the predicted pressure of the element at timestep $\Delta t$ in the region of space defined by the spatial coordinates (x, y, z) for a geological reservoir having the geological features $m$,
- $\hat{P}(\Delta t - 1, x \pm \Delta x, y \pm \Delta y, z \pm \Delta z, m)$ is the predicted pressure of the element at timestep $\Delta t$-1 in the region of space defined by the spatial coordinates $(x \pm \Delta x, y \pm \Delta y, z \pm \Delta z)$ for a geological reservoir having the geological features $m$,
- $\hat{S}(\Delta t, x, y, z, m)$ is the predicted saturation of the element at timestep $\Delta t$ in the region of space defined by the spatial coordinates (x, y, z) for a geological reservoir having the geological features $m$,
- $\hat{S}(\Delta t - 1, x \pm \Delta x, y \pm \Delta y, z \pm \Delta z, m)$ is the predicted saturation of the element at timestep $\Delta t$-1 in the region of space defined by the spatial coordinates $(x \pm \Delta x, y \pm \Delta y, z \pm \Delta z)$ for a geological reservoir having the geological features $m$,
- $P0$ is the pressure of the element at the initial timestep $\Delta t_0$ in the region of space defined by the spatial coordinates (x, y, z) for a geological reservoir having the geological features $m$,
- $S0$ is the saturation of the element at the initial timestep $\Delta t_0$ in the region of space defined by the spatial coordinates (x, y, z) for a geological reservoir having the geological features $m$,
- $g_t$ is an elementary function at timestep $\Delta t$ for the pressure, and
- $f_t$ is an elementary function at timestep $\Delta t$ for the saturation.

9. A method according to any one of claims 1 to 8, wherein each set of data of the training database (DB) are simulated data obtained using a simulator based on partial differential equations.

10. A method according to any one of claims 1 to 9, wherein the characterizing step comprises:

- obtaining a measured spatiotemporal evolution of the flow parameters ($P_F$) for the geological reservoir of interest over the same period of time than the trained model ($M_T$), and
- repeating the operation of the trained model ($M_T$) for different values of the geological feature(s) of the geological reservoir of interest in the input data ($D_{in}$) until the spatiotemporal evolution of the flow parameters ($P_F$) obtained with the trained model ($M_T$) matches the measured spatiotemporal evolution of the flow parameters ($P_F$),

the value(s) of the geological feature(s) in the input data ($D_{in}$) corresponding to the matching enabling to characterize the geological reservoir of interest.

11. A method according to any one of claims 1 to 9, wherein at least a flow parameter ($P_F$) is a gas saturation, the characterizing step comprising:

- repeating the operation of the trained model ($M_T$) for different values of the geological feature(s) of the geological reservoir of interest in the input data ($D_{in}$), and
- evaluating the probability that the gas goes out of the geological reservoir on the basis of the spatiotemporal evolution of said gas saturation obtained for the different values of the geological feature(s).

12. A computer program product comprising a readable information carrier having stored thereon a computer program comprising program instructions, the computer program being loadable onto a data processing unit and causing a method according to any one of claims 1 to 11 to be carried out when the computer program is carried out on the data processing unit.

13. A readable information carrier on which a computer program product according to claim 12 is stored.

**Patentansprüche**

1. Verfahren zum Charakterisieren eines geologischen Reservoirs von Interesse, das Verfahren umfassend die folgenden Schritte, die computerimplementiert sind:

   - Erlangen eines physikalischen Modells ($M_\varphi$), das eine Beziehung zwischen dem/den Durchflussparameter(n) ($P_F$) eines gegebenen geologischen Reservoirs zu einem Zeitschritt ($\Delta t$) und dem/den Durchflussparameter(n) ($P_F$) des gegebenen geologischen Reservoirs zu dem vorherigen Zeitschritt ($\Delta t$-1) für eine Vielzahl von Zeitschritten definiert, wobei das physikalische Modell ($M_\varphi$) auf Elementarfunktionen ($f_t$, $g_t$) basiert, die für jeden Zeitschritt spezifisch sind, sodass der Durchflussparameter ($P_F$) in einem Zeitschritt ($\Delta t$) von den Elementarfunktionen ($f_t$, $g_t$) abhängt, die dem Durchflussparameter ($P_F$) in diesem Zeitschritt ($\Delta t$) entsprechen, und von mindestens dem entsprechenden Durchflussparameter ($P_F$), der in dem vorhergehenden Zeitschritt ($\Delta t$-1) erlangt wird,
   - Erlangen einer Trainingsdatenbank (DB) in Bezug auf bekannte mögliche geologische Realisierungen eines gegebenen geologischen Reservoirs, wobei die Trainingsdatenbank (DB) für jede geologische Realisierung einen Satz von Daten umfasst, umfassend:

     • eine vergangene raum-zeitliche Entwicklung des/der Durchflussparameter(s) ($P_F$) für das geologische Reservoir,
     • Werte für mindestens ein geologisches Merkmals für das genannte geologische Reservoir,
   - Trainieren eines Modells künstlicher Intelligenz (M) gemäß einer Trainingstechnik, die auf die Trainingsdatenbank (DB) angewendet wird, um ein trainiertes Modell ($M_T$) zu erlangen, wobei das trainierte Modell ($M_T$) die räumlich-zeitliche Entwicklung des/der Durchflussparameter(s) ($P_F$) über einen Zeitraum für das geologische Reservoir von Interesse vorhersagt, wenn ein Satz von Eingangsdaten ($D_{in}$) in Bezug auf das geologische Reservoir von Interesse in das trainierte Modell ($M_T$) eingegeben wird, der Satz von Eingangsdaten ($D_{in}$) umfassend Anfangswerte von jedem Durchflussparameter ($P_F$) für das geologische Reservoir von Interesse und Werte jedes geologischen Merkmals für das geologische Reservoir von Interesse, wobei das Modell künstlicher Intelligenz (M) ein neuronales Netz ist, das neuronale Parameter aufweist, wobei die Trainingstechnik es ermöglicht, die Elementarfunktionen ($f_t$, $g_t$) des physikalischen Modells ($M_\varphi$) für jeden Zeitschritt zu approximieren, indem die Werte der neuronalen Parameter für jeden Zeitschritt angepasst werden, dass einige Werte für jeden Zeitschritt spezifisch sind,
   - Erlangen eines Satzes von Eingangsdaten ($D_{in}$) für das geologische Reservoir von Interesse, und
   - Charakterisieren des geologischen Reservoirs von Interesse durch Anwenden des trainierten Modells ($M_T$) zum Vorhersagen der räumlich-zeitlichen Entwicklung jedes Durchflussparameters ($P_F$) für das geologische Reservoir von Interesse basierend auf dem erhaltenen Satz von Eingangsdaten ($D_{in}$).

2. Verfahren nach Anspruch 1, wobei während des Trainingsschritts die Einstellung der Werte der neuronalen Parameter für jeden Zeitschritt erfolgt, sodass einige davon für alle Zeitschritte gleich sind.

3. Verfahren nach Anspruch 1 oder 2, wobei während des Trainingsschritts die Werte der neuronalen Parameter eingestellt werden, um eine Kostenfunktion zu minimieren, wobei die Kostenfunktion die Unterschiede zwischen den räumlich-zeitlichen Entwicklungen der Durchflussparameter ($P_F$) der Trainingsdatenbank (DB) und den entsprechenden räumlich-zeitlichen Entwicklungen der Durchflussparameter ($P_F$), die mit dem Modell künstlicher Intelligenz (M) erlangt werden, beschreibt.

4. Verfahren nach einem der Ansprüche 1 bis 3, wobei das Modell künstlicher Intelligenz (M) ein faltendes neuronales Netz ist.

5. Verfahren nach einem der Ansprüche 1 bis 4, wobei mindestens ein geologisches Merkmal des Reservoirs ausgewählt ist aus der Porosität, der Permeabilität, dem Netto-/Bruttoverhältnis, dem Transmissibilitätstensor der Verwerfung, den residuellen Öl-/Wassersättigungen und den Änderungen der Randbedingungen in Bezug auf die Schachtsteuerung.

6. Verfahren nach einem der Ansprüche 1 bis 5, wobei mindestens ein Durchflussparameter ($P_F$) ausgewählt ist aus der folgenden Gruppe bestehend aus: einer Fluidsättigung, einer Gassättigung, einem Flüssigkeitsdruck und einem Gasdruck.

7. Verfahren nach einem der Ansprüche 1 bis 6, wobei das physikalische Modell ($M\varphi$) derart ist, dass der Durchflussparameter ($P_F$) an einem Zeitpunkt ($\Delta t$) von den entsprechenden Elementarfunktionen ($f_t$, $g_t$) an diesem Zeitpunkt ($\Delta t$), von dem entsprechenden Durchflussparameter ($P_F$), der an dem vorherigen Zeitpunkt ($\Delta t$-1) erlangt wird, und von mindestens einem weiteren Durchflussparameter ($P_F$), der an dem vorherigen Zeitpunkt ($\Delta t$-1) erlangt wird, abhängt.

8. Verfahren nach einem der Ansprüche 1 bis 7, wobei bei Implementieren des Verfahrens mindestens zwei Durchflussparameter ($P_F$) berücksichtigt werden, wobei die zwei Durchflussparameter ($P_F$) eine Sättigung und ein Druck eines Elements in dem betrachteten geologischen Reservoir sind, wobei das physikalische Modell ($M\varphi$) durch die folgenden Gleichungen beschrieben ist:

$$\hat{P}(\Delta t, x, y, z, m) =$$
$$\hat{P}(\Delta t - 1, x \pm \Delta x, y \pm \Delta y, z \pm \Delta z, m)$$
$$- g_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$\hat{S}(\Delta t, x, y, z, m)$$
$$= \hat{S}(\Delta t - 1, x \pm \Delta x, y \pm \Delta y, z \pm \Delta z, m)$$
$$- f_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$P(\Delta t_0, x, y, z, m) = P0$$
$$S(\Delta t_0, x, y, z, m) = S0$$

wobei:

• $m$ den geologischen Merkmalen eines geologischen Reservoirs entspricht,
• $\hat{P}(\Delta t, x, y, z, m)$ der vorhergesagte Druck des Elements in dem Zeitschritt $\Delta t$ in der durch die Raumkoordinaten (x, y, z) definierten Raumregion für ein geologisches Reservoir mit den geologischen Merkmalen $m$ ist,
• $\hat{P}(\Delta t$-1$, x \pm \Delta x, y \pm \Delta y, z \pm \Delta z, m)$ der vorhergesagte Druck des Elements in dem Zeitschritt $\Delta t$-1 in der durch die Raumkoordinaten ($x \pm \Delta x$, $y \pm \Delta y$, $z \pm \Delta z$) definierten Raumregion für ein geologisches Reservoir mit den geologischen Merkmalen ist $m$,
• $\hat{S}(\Delta t, x, y, z, m)$ die vorhergesagte Sättigung des Elements zum Zeitschritt $\Delta t$ in dem durch die Raumkoordinaten (x, y, z) definierten Raumgebiet für ein geologisches Reservoir mit den geologischen Merkmalen $m$ ist,
• $\hat{S}(\Delta t$-1$, x \pm \Delta x, y \pm \Delta y, z \pm \Delta z, m)$ die vorhergesagte Sättigung des Elements im Zeitschritt $\Delta t$-1 in der durch die Raumkoordinaten ($x \pm \Delta x$, $y \pm \Delta y$, $z \pm \Delta z$) definierten Raumregion für ein geologisches Reservoir mit den geologischen Eigenschaften $m$ ist,
• $P0$ der Druck des Elements zum Anfangszeitpunkt $\Delta t_0$ in der durch die Raumkoordinaten (x, y, z) definierten Raumregion für ein geologisches Reservoir mit den geologischen Merkmalen $m$ ist,
• $S0$ die Sättigung des Elements zum anfänglichen Zeitschritt $\Delta t_0$ in der durch die Raumkoordinaten (x, y, z) definierten Raumregion für ein geologisches Reservoir mit den geologischen Merkmalen $m$ ist,
• $g_t$ eine elementare Funktion in dem Zeitschritt $\Delta t$ für den Druck ist, und
• $f_t$ eine elementare Funktion in dem Zeitschritt $\Delta t$ für die Sättigung ist.

9. Verfahren nach einem der Ansprüche 1 bis 8, wobei jeder Satz von Daten der Trainingsdatenbank (DB) simulierte Daten enthält, die mittels eines auf partiellen Differentialgleichungen basierenden Simulators erhalten werden.

10. Verfahren nach einem der Ansprüche 1 bis 9, wobei der Charakterisierungsschritt Folgendes umfasst:

- Erlangen der gemessenen räumlich-zeitlichen Entwicklung der Durchflussparameter ($P_F$) für das geologische Reservoir von Interesse über denselben Zeitraum wie das trainierte Modell (M$_T$), und

- Wiederholen des Betriebs des trainierten Modells (M$_T$) für verschiedene Werte des/der geologischen Merkmal(e) der geologischen Merkmale des Reservoirs von Interesse in den Eingangsdaten D$_{in}$, bis die mit dem trainierten Modell M$_T$ erlangte räumlich-zeitliche Entwicklung der Durchflussparameter P$_F$ mit der gemessenen räumlich-zeitlichen Entwicklung der Durchflussparameter P$_F$ übereinstimmt,

wobei der Wert des/der geologischen Merkmal(e) in den Eingangsdaten (D$_{in}$) dem Abgleich entspricht, der ermöglicht, das geologische Reservoir von Interesse zu charakterisieren.

11. Verfahren nach einem der Ansprüche 1 bis 9, wobei mindestens ein Durchflussparameter (P$_F$) eine Gassättigung ist, der Charakterisierungsschritt umfassend:

- Wiederholen des Betriebs des trainierten Modells (M$_T$) für verschiedene Werte des/der geologischen Merkmal(e) des Reservoirs von Interesse in den Eingangsdaten (D$_{in}$) und
- Bewerten der Wahrscheinlichkeit, dass das Gas aus dem geologischen Reservoir entweicht, basierend auf der räumlich-zeitlichen Entwicklung der Gassättigung, die für die verschiedenen Werte der geologischen Eigenschaft(en) erlangt wird.

12. Computerprogrammprodukt, umfassend einen lesbaren Informationsträger, auf dem ein Computerprogramm mit Programmanweisungen gespeichert ist, wobei das Computerprogramm auf eine Datenverarbeitungseinheit geladen werden kann und bewirkt, dass ein Verfahren nach einem der Ansprüche 1 bis 11 durchgeführt wird, wenn das Computerprogramm auf der Datenverarbeitungseinheit ausgeführt wird.

13. Lesbarer Informationsträger, auf dem ein Computerprogrammprodukt nach Anspruch 12 gespeichert ist.

**Revendications**

1. Procédé de caractérisation d'un réservoir géologique d'intérêt, le procédé comprenant les étapes suivantes qui sont mises en œuvre par ordinateur :

- l'obtention d'un modèle physique (Mφ) définissant une relation entre un ou plusieurs paramètres d'écoulement (P$_F$) d'un réservoir géologique donné à un pas de temps (Δt) et un ou plusieurs paramètres d'écoulement (P$_F$) du réservoir géologique donné au pas de temps précédent (Δt-1) pour une pluralité de pas de temps, le modèle physique (Mφ) étant fondé sur des fonctions élémentaires (f$_t$, g$_t$) spécifiques de chaque pas de temps, de sorte que le paramètre d'écoulement (P$_F$) à un pas de temps (Δt) dépend des fonctions élémentaires (f$_t$, g$_t$) correspondant audit paramètre d'écoulement (P$_F$) audit pas de temps (Δt) et au moins du paramètre d'écoulement (P$_F$) correspondant obtenu au pas de temps précédent (Δt-1),
- l'obtention d'une base de données d'apprentissage (DB) relative à des réalisations géologiques possibles connues d'un réservoir géologique donné, la base de données d'apprentissage (DB) comprenant pour chaque réalisation géologique un ensemble de données comprenant :

• une évolution spatio-temporelle passée d'un ou plusieurs paramètres d'écoulement (P$_F$) pour ledit réservoir géologique,
• les valeurs d'au moins une caractéristique géologique dudit réservoir géologique,
- l'entraînement d'un modèle d'intelligence artificielle (M) selon une technique d'apprentissage appliquée à la base de données d'apprentissage (DB) pour obtenir un modèle entraîné (M$_T$), le modèle entraîné (M$_T$) prédisant l'évolution spatio-temporelle sur une période de temps d'un ou plusieurs paramètres d'écoulement (P$_F$) pour le réservoir géologique d'intérêt lorsqu'un ensemble des données d'entrée (D$_{in}$) relatif au réservoir géologique d'intérêt es introduit dans le modèle entraîné (M$_T$), l'ensemble de données d'entrée (D$_{in}$) comprenant les valeurs initiales de chaque paramètre d'écoulement (P$_F$) pour le réservoir géologique d'intérêt et les valeurs de chaque caractéristique géologique pour ledit réservoir géologique d'intérêt, le modèle d'intelligence artificielle (M) étant un réseau neuronal possédant des paramètres neuronaux, la technique d'apprentissage permettant une approximation des fonctions élémentaires (f$_t$, g$_t$) du modèle physique (Mφ) pour chaque pas de temps en réglant les valeurs des paramètres neuronaux pour chaque pas de temps de sorte que certaines valeurs soient spécifiques de chaque pas de temps,
- l'obtention d'un ensemble de données d'entrée (D$_{in}$) pour le réservoir géologique d'intérêt, et
- la caractérisation du réservoir géologique d'intérêt en utilisant le modèle entraîné (M$_T$) pour prédire l'évolution spatio-temporelle de chaque paramètre d'écoulement ($P_F$) pour le réservoir géologique d'intérêt sur la base de l'ensemble de données d'entrée ($D_{in}$) obtenu.

2. Procédé selon la revendication 1, dans lequel, au cours de l'étape d'apprentissage, le réglage des valeurs des paramètres neuronaux pour chaque pas de temps est effectué de sorte que certaines valeurs soient communes à tous les pas de temps.

3. Procédé selon la revendication 1 ou 2, dans lequel au cours de l'étape d'apprentissage, les valeurs des paramètres neuronaux sont réglées de façon à minimiser une fonction de coût, la fonction de coût décrivant les différences entre les évolutions spatio-temporelles d'un ou plusieurs paramètres d'écoulement ($P_F$) de la base de données d'apprentissage (DB) et les évolutions spatio-temporelles correspondantes d'un ou plusieurs paramètres d'écoulement ($P_F$) obtenues à l'aide du modèle d'intelligence artificielle (M).

4. Procédé selon l'une quelconque des revendications 1 à 3, dans lequel le modèle d'intelligence artificielle (M) est un réseau neuronal convolutif.

5. Procédé selon l'une quelconque des revendications 1 à 4, dans lequel au moins une caractéristique géologique du réservoir géologique est choisie parmi la porosité, la perméabilité, le rapport net/brut, le tenseur de transmissibilité de faille, les saturations résiduelles en huile/eau et les changements dans les conditions limites liées aux contrôles de puits.

6. Procédé selon l'une quelconque des revendications 1 à 5, dans lequel au moins un paramètre d'écoulement ($P_F$) est choisi dans le groupe constitué par : une saturation en fluide, une saturation en gaz, une pression de fluide et une pression de gaz.

7. Procédé selon l'une quelconque des revendications 1 à 6, dans lequel le modèle physique ($M\varphi$) est tel que le paramètre d'écoulement ($P_F$) à un pas de temps ($\Delta t$) dépend des fonctions élémentaires ($f_t$, $g_t$) correspondantes audit pas de temps ($\Delta t$), du paramètre d'écoulement ($P_F$) correspondant obtenu au pas de temps précédent ($\Delta t$-1) et d'au moins un autre paramètre d'écoulement ($P_F$) obtenu au pas de temps précédent ($\Delta t$-1).

8. Procédé selon l'une quelconque des revendications 1 à 7, dans lequel au moins deux paramètres d'écoulement ($P_F$) sont pris en compte lors de la mise en œuvre du procédé, les deux paramètres d'écoulement ($P_F$) étant une saturation et une pression d'un élément dans le réservoir géologique considéré, le modèle physique ($M\varphi$) étant décrit par les équations suivantes :

$$\hat{P}(\Delta t, x, y, z, m) =$$
$$\hat{P}(\Delta t - 1, x \pm \Delta x, y \pm \Delta y, z \pm \Delta z, m)$$
$$- g_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$\hat{S}(\Delta t, x, y, z, m)$$
$$= \hat{S}(\Delta t - 1, x \pm \Delta x, y \pm \Delta y, z \pm \Delta z, m)$$
$$- f_t\left(m, \hat{P}(\Delta t - 1, x \pm \Delta x, y \pm \Delta y, z \pm \Delta z, m), \hat{S}(\Delta t - 1, x \pm \Delta x, y \pm \Delta y, z \pm \Delta z, m)\right)$$

$$P(\Delta t_0, x, y, z, m) = P0$$

$$S(\Delta t_0, x, y, z, m) = S0$$

où :

    • *m* correspond aux caractéristiques géologiques d'un réservoir géologique,

• $\hat{P}(\Delta t, x, y, z, m)$ est la pression prédite de l'élément au pas de temps $\Delta t$ dans la région de l'espace définie par les coordonnées spatiales (x, y, z) pour un réservoir géologique présentant les caractéristiques géologiques $m$,

• $\hat{P}(\Delta t - 1, x \pm \Delta x, y \pm \Delta y, z \pm \Delta z, m)$ est la pression prédite de l'élément au pas de temps $\Delta t$-1 dans la région de l'espace définie par les coordonnées spatiales $(x \pm \Delta x, y \pm \Delta y, z \pm \Delta z)$ pour un réservoir géologique présentant les caractéristiques géologiques $m$,

• $\hat{S}(\Delta t, x, y, z, m)$ est la saturation prédite de l'élément au pas de temps $\Delta t$ dans la région de l'espace définie par les coordonnées spatiales (x, y, z) pour un réservoir géologique présentant les caractéristiques géologiques $m$,

• $\hat{S}(\Delta t - 1, x \pm \Delta x, y \pm \Delta y, z \pm \Delta z, m)$ est la saturation prédite de l'élément au pas de temps $\Delta t$-1 dans la région de l'espace définie par les coordonnées spatiales $(x \pm \Delta x, y \pm \Delta y, z \pm \Delta z)$ pour un réservoir géologiques présentant les caractéristiques géologiques $m$,

• $P0$ est la pression de l'élément au pas de temps initial $\Delta t_0$ dans la région de l'espace définie par les coordonnées spatiales (x, y, z) pour un réservoir géologique ayant les caractéristiques géologiques $m$,

• $S0$ est la saturation de l'élément au pas de temps initial $\Delta t_0$ dans la région de l'espace définie par les coordonnées spatiales (x, y, z) pour un réservoir géologiques ayant les caractéristiques géologiques $m$,

• $g_t$ est une fonction élémentaire au pas de temps $\Delta t$ pour la pression, et

• $f_t$ est une fonction élémentaire au pas de temps $\Delta t$ pour la saturation.

9. Procédé selon l'une quelconque des revendications 1 à 8, dans lequel chaque ensemble de données de la base de données d'apprentissage (DB) est constitué de données simulées obtenues à l'aide d'un simulateur fondé sur des équations différentielles partielles.

10. Procédé selon l'une quelconque des revendications 1 à 9, dans lequel l'étape de caractérisation comprend :

- l'obtention d'une évolution spatio-temporelle mesurée des paramètres d'écoulement ($P_F$) pour le réservoir géologique d'intérêt sur la même période de temps que le modèle entraîné ($M_T$), et
- la répétition de l'utilisation du modèle entraîné ($M_T$) pour différentes valeurs des une ou plusieurs caractéristiques géologiques du réservoir géologique d'intérêt dans les données d'entrée ($D_{in}$) jusqu'à ce que l'évolution spatio-temporelle des paramètres d'écoulement ($P_F$) obtenue avec le modèle entraîné ($M_T$) corresponde à l'évolution spatio-temporelle mesurée des paramètres d'écoulement ($P_F$),

les une ou plusieurs valeurs des une ou plusieurs caractéristiques géologiques dans les données d'entrée ($D_{in}$) correspondant à la mise en correspondance permettant de caractériser le réservoir géologique d'intérêt.

11. Procédé selon l'une quelconque des revendications 1 à 9, dans lequel au moins un paramètre d'écoulement ($P_F$) est une saturation en gaz, l'étape de caractérisation comprenant:

- la répétition de l'utilisation du modèle entraîné ($M_T$) pour différentes valeurs des une ou plusieurs caractéristiques géologiques du réservoir géologique d'intérêt dans les données d'entrée ($Di_n$), et
- l'évaluation de la probabilité que le gaz sorte du réservoir géologique sur la base de l'évolution spatio-temporelle de ladite saturation en gaz obtenue pour les différentes valeurs des une ou plusieurs caractéristiques géologiques.

12. Produit programme d'ordinateur comprenant un support d'information lisible sur lequel est stocké un programme d'ordinateur comprenant des instructions de programme, le programme d'ordinateur étant chargeable sur une unité de traitement de données et amenant un procédé selon l'une quelconque des revendications 1 à 11 à être mis en œuvre lorsque le programme d'ordinateur est mis en œuvre sur l'unité de traitement de données.

13. Support d'information lisible sur lequel est stocké un produit programme d'ordinateur selon la revendication 12.

FIG.1

<u>FIG.2</u>

FIG.3

$$D_{in} \longrightarrow \boxed{M_T} \longrightarrow (P_{F_O}, ..., P_{F_t}, ...P_{F_N})$$

**FIG.4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021389491 A1

**Non-patent literature cited in the description**

- **ZHANG, Z** ; **WU, C** ; **COLEMAN, S** ; **KERR, D**. DENSE-INception U-net for medical image segmentation. *Computer Methods and Programs in Biomedicine*, 2020